# EUROPÄISCHE PATENTSCHRIFT

(11) **EP 2 798 300 B1**
(45) Veröffentlichungstag und Bekanntmachung des Hinweises auf die Patenterteilung: **23.05.2018**
(21) Anmeldenummer: 12818892.7
(22) Anmeldetag: 21.12.2012
(51) Int. Cl.: F28D 1/03, F28D 1/04, F28D 20/02

(54) **WÄRMEÜBERTRAGER**
HEAT EXCHANGER
ÉCHANGEUR THERMIQUE

(30) Priorität: 30.12.2011 DE 102011090188
(43) Veröffentlichungstag der Anmeldung: 05.11.2014
(73) Patentinhaber: MAHLE Behr GmbH & Co. KG, 70469 Stuttgart (DE)
(72) Erfinder: SEEWALD, Wolfgang, 71732 Tamm (DE); VIEHRIG, Falk, 71069 Sindelfingen (DE)
(74) Vertreter: Grauel, Andreas
(86) Internationale Anmeldenummer: PCT/EP2012/076858
(87) Internationale Veröffentlichungsnummer: WO 2013/098276

(56) Entgegenhaltungen:
- WO-A1-2006/059005
- WO-A1-2010/150774
- FR-A1- 2 866 947
- FR-A1- 2 918 166
- JP-A- H11 153 395
- JP-A- S62 293 086
- JP-A- 2000 205 777
- KR-A- 20070 067 848
- US-A- 3 292 690
- US-A1- 2006 266 501
- US-A1- 2009 120 624

## Beschreibung

### Technisches Gebiet

Die Erfindung betrifft einen Wärmeübertrager in Scheibenbauweise, insbesondere für Kraftfahrzeuge, mit einer Vielzahl von Scheibengruppen zur Bildung von ersten und zweiten und dritten Strömungspfaden, wobei zwischen benachbarten Scheibengruppen ein Raumbereich für vierte Strömungspfade gebildet ist.

### Stand der Technik

Wärmeübertrager sind in Kraftfahrzeugen in einer hohen Vielzahl und zu verschiedensten Zwecken vorgesehen. So sind in Klimaanlagen Verdampfer verwendet, um durch Verdampfung des Kältemittels in Strömungspfaden im Verdampfer die durch Strömungspfade durch den Verdampfer strömende Luft abzukühlen, um damit eine Klimatisierung und Entfeuchtung im Kraftfahrzeuginnenraum zu bewirken. Dazu sind Verdampfer in Flachrohrbauweise oder in Scheibenbauweise bekannt geworden.

Bei Kraftfahrzeugen ist in jüngster Zeit der wesentliche Trend, dass der Kraftstoffverbrauch eines Kraftfahrzeuges und der damit einhergehende CO₂ Ausstoß zu reduzieren ist. Dies wird bei Kraftfahrzeugen mit Verbrennungsmotor auch dadurch erreicht, dass bei vorrübergehendem Stillstand, beispielsweise hervorgerufen durch ein Anhalten des Fahrzeuges an einer Ampel oder in vergleichbaren Situationen, der Verbrennungsmotor des Fahrzeuges abgeschaltet wird. Sobald das Fahrzeug durch Betätigung des Gaspedales oder des Kupplungspedales wieder zum Anfahren aktiviert wird, wird der Verbrennungsmotor automatisiert wieder eingeschaltet. Diese Technologie wird auch als Start-Stopp-Verfahren bezeichnet. Solche Start-Stopp-Verfahren sind in verbrauchsarmen Kraftfahrzeugen bereits umgesetzt worden. Für die marktüblichen Kraftfahrzeugklimaanlagen mit einem Kältekreislauf nach dem Kaltdampfprozess wird der Kompressor des Kältekreislaufes in der Regel über einen vom Kraftfahrzeugantriebsmotor angetriebenen Riementrieb angetrieben. Bei einem Motorstillstand ergibt sich daraus, dass die Klimaanlage dann bei stehendem Kompressorantrieb nicht mehr als kälteproduzierend arbeitend bezeichnet werden kann. Beim Abschalten des Motors im Start-Stopp-Betrieb kann somit die Klimatisierung des Kraftfahrzeuges nicht mehr arbeiten und Kälteleistung für die Abkühlung des Kraftfahrzeuginnenraums bereitstellen. Als Konsequenz dieser Situation erwärmt sich der Verdampfer der Klimaanlage relativ schnell und die durch den Verdampfer strömende Luft wird nur geringfügig bzw. zu wenig abgekühlt. Dies bewirkt zum einen, dass die Fahrzeuginnenraumtemperatur ansteigt und das Wohlbefinden der Fahrzeuginsassen beeinträchtigt wird.
Bei einer Kraftfahrzeugklimaanlage findet neben der Temperaturreduzierung auch ein Entfeuchtungsprozess statt, da die in der Luft vorhandene Luftfeuchtigkeit am Verdampfer kondensiert und aus dem Fahrzeug durch einen Kondensatauslass austritt. Die den Verdampfer durchströmende Luft wird somit entfeuchtet und tritt entfeuchtet in den Kraftfahrzeuginnenraum ein. Bei aktivem Start-Stopp-Betrieb bewirkt dies auch, dass die Entfeuchtung der in den Kraftfahrzeuginnenraum eintretenden Luft nicht mehr ausreichend gewährleistet werden kann, so dass die Luftfeuchtigkeit im Fahrzeuginnenraum im aktiven Start-Stopp-Betrieb steigt. Dies führt auch zu einem für die Fahrzeuginsassen als unangenehm und unkomfortabel empfundenen Luftfeuchtigkeitsanstieg.

Um diese temperatur- und luftfeuchtigkeitsansteigenden Prozesse zu vermeiden oder zu verlangsamen, wurde der sogenannte Speicher-Verdampfer entwickelt, welcher neben der eigentlichen Verdampferfunktion auch ein Kältespeichermedium umfasst, welches der den Verdampfer im aktivem Start-Stopp-Betrieb durchströmenden Luft Wärme entzieht und diese weiterhin abkühlt und entfeuchtet. Diese Speicherverdampfer sind beispielsweise durch die DE 102006028017 bekannt geworden. Dabei besteht der in dieser Druckschrift offenbarte Speicherverdampfer aus zwei separaten Wärmeübertragerblöcken, dem Verdampfer und dem Speicherteil, die in unterschiedlichen Herstellungsprozessen hergestellt werden und erst kurz vor dem Lötprozess miteinander verbunden werden und anschließend gemeinsam zu einer Einheit verlötet werden. Dabei besteht der Hauptverdampfer aus zwei Flachrohrreihen, die in Luftrichtung hintereinander angeordnet sind und der Speicherteil diesen beiden Flachrohrreihen in Luftrichtung nachgeschaltet ist. Der Speicherteil besteht dabei aus Doppelrohrreihen, bei welchen zwei Rohre ineinander gesteckt werden, wobei im Innenraum des Innenrohres das Kältemittel durchströmt und im Zwischenraum zwischen Außenrohr und Innenrohr das Kältespeichermedium angeordnet ist. Der diesbezügliche Herstellungsprozess stellt sich als aufwendig und teuer dar, da viele verschiedene Teile aufeinander abgestimmt, gefügt und kalibriert werden müssen, um einen funktionstüchtigen Wärmeübertrager herstellen zu können. Insbesondere erweist sich das Doppelrohr mit verdeckten Rohreinführungen als relativ komplex, die Teilezahl ist sehr hoch bei gleichzeitig hoher Anzahl unterschiedlicher Teile und die Einhaltung der Toleranzen auf Grund der Vielzahl der Bauteile stellt sich als Risiko für die Prozessfähigkeit dar. Dies bedeutet im Umkehrschluss ein erhöhtes Risiko an Leckagen, so dass neben den Teilekosten auch die Ausschussraten dem Risiko der Erhöhung ausgesetzt sind. WO2010150774 A1, FR2866947 A1 und JPS62293086 A offenbaren Wärmeübertrager in Scheibenbauweise mit einer Vielzahl von Scheibenpaaren zur Bildung von mehreren Strömungspfaden.

### Darstellung der Erfindung, Aufgabe, Lösung, Vorteile

Es ist die Aufgabe der Erfindung, einen Wärmeübertrager zu schaffen, welcher einfach herstellbar ist und geringere Kosten hervorruft als die im Stand der Technik bekannten Wärmeübertrager bei gleichzeitiger reduzierter Komplexität und reduzierter Ausschussrate.

Dies wird erreicht mit einem Wärmeübertrager mit den Merkmalen von Anspruch 1, wonach ein Wärmeübertrager geschaffen wird in Scheibenbauweise, insbesondere für Kraftfahrzeuge, mit einer Vielzahl von Scheibenpaaren zur Bildung von ersten, zweiten und dritten Strömungspfaden, wobei zwischen benachbarten Scheibenpaaren ein Raumbereich für vierte Strömungspfade gebildet ist, die Scheibenpaare aus zumindest einer ersten Scheibe und einer zweiten Scheibe gebildet sind zur Bildung der ersten Strömungspfade und der zweiten Strömungspfade zwischen der ersten und der zweiten Scheibe, wobei jeweils eine Aufsatzscheibe auf die erste und auf die zweite Scheibe aufgelegt wird zur Bildung des dritten Strömungspfads zwischen der ersten Scheibe und der Aufsatzscheibe und zwischen der zweiten Scheibe und der Aufsatzscheibe. Dadurch kann einfach ein Scheibenpaar erzeugt werden, in dem nur ein Werkzeug nötig ist, welches eine identische Scheibe erzeugt, die dann für die Bildung der Kanäle verwendet wird.

Dabei ist es vorteilhaft, wenn die Scheibe und/oder die Aufsatzscheibe als Anschluss- und Verbindungsbereiche Öffnungen und/oder Näpfe aufweist und zur Ausbildung von Strömungspfaden zwischen Anschlussbereichen kanalbildende Strukturen, wie Prägungen, aufweist.

Auch ist es zweckmäßig, wenn die erste Scheibe und die zweite Scheibe der Scheibengruppe an zwei gegenüberliegenden Endbereichen jeweils drei Anschlussbereiche aufweist als Einlass und/oder Auslass des ersten, des zweiten und des dritten Strömungspfads und jeweils eine kanalbildende Struktur zwischen jeweils zwei Anschlussbereichen zur Ausbildung des ersten und des zweiten Strömungspfads vorgesehen sind.

Auch ist es zweckmäßig, wenn die erste Scheibe und die zweite Scheibe eine kanalbildende Struktur zwischen jeweils zwei Anschlussbereichen zur Ausbildung des dritten Strömungspfads aufweist.

Weiterhin ist es zweckmäßig, wenn die erste Scheibe und die zweite Scheibe einen Bereich aufweist, welcher mit einer Aufsatzscheibe versehbar ist zur Bildung einer kanalbildenden Struktur zwischen jeweils zwei Anschlussbereichen zur Ausbildung des dritten Strömungspfads.

Auch ist es zweckmäßig, wenn die kanalbildenden Strukturen in die erste Scheibe und/oder in die zweite Scheibe und/oder in die Aufsatzscheibe als vorspringender Kanal geprägt sind.

Vorteilhaft ist es, wenn die Aufsatzscheibe einteilig mit der ersten Scheibe und/oder mit der zweiten Scheibe gebildet ist.

Auch ist es zweckmäßig, wenn die Aufsatzscheibe zusammen mit der ersten oder der zweiten Scheibe erzeugt wird und dann durch Umbiegen auf einen ebenen Bereich der ersten oder zweiten Scheibe platzierbar ist.

Weiterhin ist es zweckmäßig, wenn die Aufsatzscheibe getrennt von der ersten Scheibe oder von der zweiten Scheibe gebildet ist und auf einen ebenen Bereich der ersten oder zweiten Scheibe platzierbar ist.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: ein erstes Ausführungsbeispiel eines erfindungsgemäßen Wärmeübertragers,
- Fig. 2: eine Ansicht einer Detailvergrößerung gemäß der Figur 1,
- Fig. 3: eine Ansicht einer Scheibenanordnung eines nicht erfindungsgemäßen Wärmeübertragers,
- Fig. 4: eine Ansicht einer Scheibenanordnung eines Wärmeübertragers,
- Fig. 5: eine Ansicht einer Scheibenanordnung eines nicht erfindungsgemäßen Wärmeübertragers,
- Fig. 6: eine Ansicht einer Scheibenanordnung eines nicht erfindungsgemäßen Wärmeübertragers,
- Fig. 7: eine Ansicht einer Scheibenanordnung eines nicht erfindungsgemäßen Wärmeübertragers,
- Fig. 8: eine Ansicht einer Scheibenanordnung eines Wärmeübertragers,
- Fig. 9: eine Ansicht einer Scheibenanordnung eines Wärmeübertragers,
- Fig. 10: eine Ansicht einer Scheibenanordnung eines Wärmeübertragers,
- Fig. 11: eine Ansicht einer Scheibenanordnung eines Wärmeübertragers in einer Detailansicht,
- Fig. 12: eine Ansicht einer Scheibenanordnung eines Wärmeübertragers in einer Schnittdarstellung,
- Fig. 13: eine Ansicht einer Scheibenanordnung eines Wärmeübertragers in einer Schnittdarstellung, und
- Fig. 14: eine Ansicht einer Scheibenanordnung eines Wärmeübertragers in einer Schnittdarstellung.

### Bevorzugte Ausführung der Erfindung

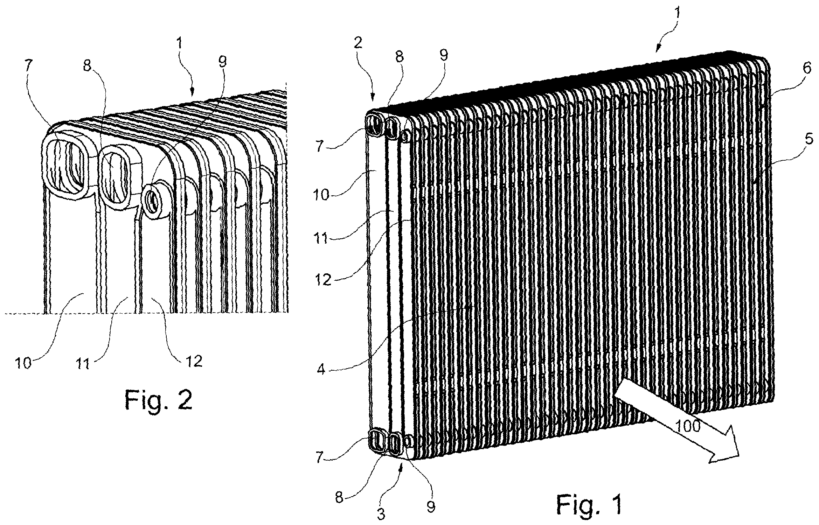

Die Figur 1 zeigt einen Wärmeübertrager 1, der einen ersten oberen Sammler 2 und einen zweiten unteren Sammler 3 aufweist, die an gegenüberliegenden Seiten des Wärmeübertragers angeordnet sind und die sich in Querrichtung des Wärmeübertragers jeweils erstrecken. Dabei werden die Sammler 2, 3 gebildet durch durchgängige Öffnungen in Scheibenpaaren, die aneinander gereiht sind und miteinander fluiddicht verbunden sind. Dabei sind die Sammler 2, 3 mit einem Block 4 verbunden, welcher zwischen den beiden Sammlern 2, 3 angeordnet ist, und bei welchen das Netz des Blocks aus Scheiben gebildet ist, die zu Scheibenpaaren 5 zusammengefügt sind, wobei eine Vielzahl von Scheibenpaaren 5 nebeneinander angeordnet werden, um das Netz des Wärmeübertragers 1 auszubilden. Zwischen zwei jeweils benachbarten Scheibenpaaren 5 sind Raumbereiche 6 vorgesehen, welche zur Durchströmung beispielsweise von Luft durch den Wärmeübertrager dienen. Die Luftrichtung zur Durchströmung des Wärmeübertragers durch die Raumbereiche 6 ist mit 100 angegeben, siehe den diesbezüglichen Pfeil in der Figur 1. In den genannten Raumbereichen 6 können vorteilhaft auch Rippen, wie beispielsweise Wellrippen, vorgesehen sein, um den Wärmeübergang zwischen den Scheibenpaaren und der Luft zu verbessern.

Wie in Figur 1 zu erkennen ist, geht der obere Sammler und auch der untere Sammler auf im Wesentlichen drei Strömungskanäle zurück, welche durch die drei Anschlussstutzen 7, 8, 9 charakterisiert bzw. angedeutet sind. Die Strömungskanäle sind quasi eine Verlängerung der durch die Bezugszeichen 7, 8, 9 gekennzeichneten Anschlussstutzen, die sich in Querrichtung des Wärmeübertragers 1 erstrecken.

Zwischen den Sammlern sind weiterhin Strömungskanäle vorgesehen, die sich jeweils zwischen einem der Sammler erstrecken, und welche sich in erste, zweite und dritte Strömungskanäle 10, 11, 12 unterteilen. Die Strömungskanäle 10 sind zwischen den gegenüberliegenden Anschlussbereichen 7 ausgebildet und erstrecken sich dazwischen, die Strömungskanäle 11 sind zwischen den gegenüberliegenden Anschlussbereichen 8 ausgebildet und erstrecken sich zwischen diesen, und die Strömungskanäle 12 sind zwischen den gegenüberliegenden Anschlussbereichen 9 ausgebildet bzw. erstrecken sich zwischen diesen.

Die Figur 2 zeigt in einer Detaildarstellung noch einmal einen oberen Ausschnitt des Wärmeübertragers 1 mit den Anschlussbereichen 7, 8, 9, die als Näpfe in den Scheiben der Scheibenpaare angeordnet sind und die bei sich berührenden aneinander liegenden Scheibenpaaren derart angeordnet sind, dass sie beiderseits aus der Ebene der Scheibe bzw. des Scheibenpaares hervorstehen und bei benachbarten Scheibenpaaren sich die Anschlussstutzen berühren, so dass sie miteinander verlötbar und abdichtbar sind. Weiterhin sind die Strömungskanäle 10, 11, 12 zu erkennen, die sich ausgehend von dem jeweiligen Anschlussbereich 7, 8, 9 in senkrechter Richtung zum benachbarten Anschlussbereich erstrecken, wobei der benachbarte Anschlussbereich in der Figur 2 nicht zu erkennen ist.

Weiterhin ist zu erkennen, dass die Anschlussbereiche 7, 8 von ihrer Querschnittsfläche deutlich größer sind als der Anschlussbereich 9 des Strömungskanals 12.

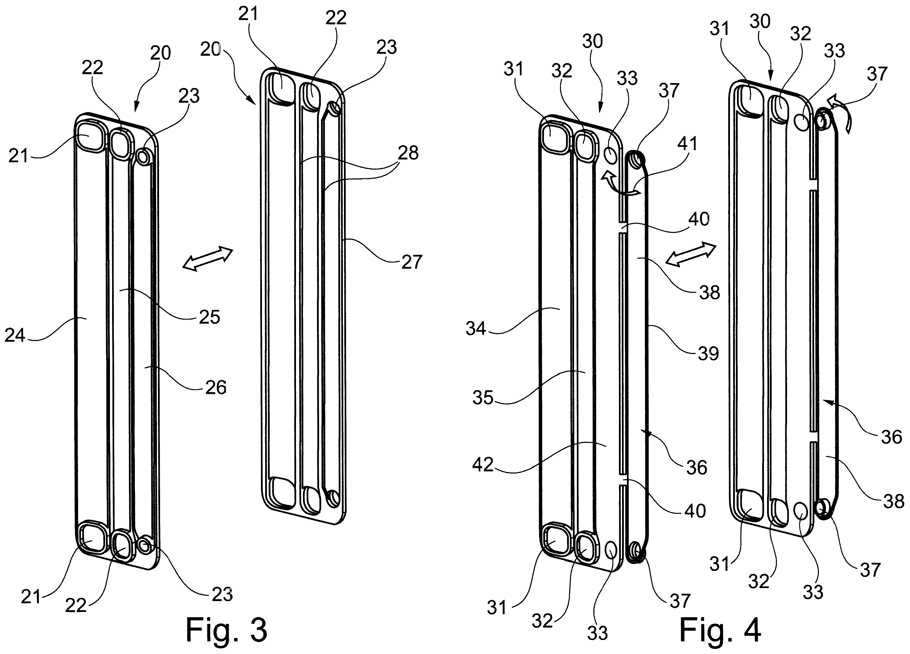

Die Figur 3 zeigt ein nicht erfindungsgemäßes Beispiel eines Scheibenpaares 20, das eine Ausgestaltung aufweist, bei welcher an den jeweiligen gegenüberliegenden Endbereichen drei Anschlüsse bzw. Näpfe zum Anschluss vorgesehen sind, die mit 21, 22, 23 bezeichnet sind. Zwischen diesen Anschlüssen sind Strömungskanäle 24, 25, 26 vorgesehen, die als kanalbildende Strukturen in das Blech geprägt sind und die sich zwischen den jeweiligen Paaren von Anschlussbereichen 21, 22, 23 erstrecken. Weiterhin ist zu erkennen, dass die Scheibe einen umlaufenden Rand 27 aufweist und zwischen den Strömungskanälen Stege 28 vorgesehen sind, welche die Strömungskanäle voneinander trennen. Werden zwei solcher Scheiben aufeinander gelegt und miteinander verlötet, so ergibt sich ein Scheibenpaar, bei dem beiderseits an den Endbereichen jeweils sich gegenüberliegende Näpfe ausbilden, die senkrecht zur Scheibenebene hervorstehen, wobei zwischen den beiden Scheiben jeweils drei Strömungskanäle 24, 25, 26 vorgesehen sind, zur Durchströmung der Scheibe zwischen den jeweiligen Anschlussbereichen.

Die Figur 4 zeigt eine diesbezügliche alternative Ausführungsform eines Scheibenpaares 30, bei dem wiederum an den beiden oberen Endbereichen Anschlussbereiche 31, 32, 33 vorgesehen sind, wobei die Anschlussbereiche 31 und 32 als Näpfe ausgebildet sind, die aus der Ebene der Scheibe hervorstehen. Zwischen diesen beiden Näpfen 31, 32 sind wiederum Strömungskanäle 34, 35 vorgesehen, die als Strömungskanäle zwischen den jeweiligen Näpfen ein Fluid durchleiten können. Die Anschlussbereiche 33 hingegen sind lediglich als Öffnungen in der ebenen Scheibe ausgebildet und zwischen diesen Öffnungen ist auch kein Strömungskanal in die Scheibe eingearbeitet, wie beispielsweise geprägt. Weiterhin weist die Scheibe jedoch noch eine Aufsatzscheibe 36 auf, die an ihren beiden Endbereichen Öffnungen mit Näpfen 37 aufweist, die zur Einleitung eines Fluids dienen. Weiterhin ist die Aufsatzscheibe mit einem Strömungskanal 38 fundiert ausgebildet und mit einem umlaufenden Rand 39 versehen. Diese Aufsatzscheibe ist an den Bereichen 40 mit der Scheibe 30 verbunden, wie insbesondere einteilig ausgebildet. Wird nun die Aufsatzscheibe 36 in Richtung auf die Scheibe geklappt, wie es der Pfeil 41 empfiehlt, so legt sich die Aufsatzscheibe mit ihrem umlaufenden Rand 39 auf den ebenen Bereich 42 der Scheibe 30 und bildet so einen Strömungskanal aus.

Werden nun zwei Scheiben des Typs der Figur 4 aufeinander gelegt und die diesbezüglichen Aufsatzscheiben werden auf die Scheibe umgeklappt und miteinander verlötet, ergibt sich wiederum ein Scheibenpaar mit drei Strömungskanälen, die jeweils einen Anschlussbereich an ihren beiden gegenüberliegenden Enden aufweisen, die durch Näpfe ausgestaltet sind.

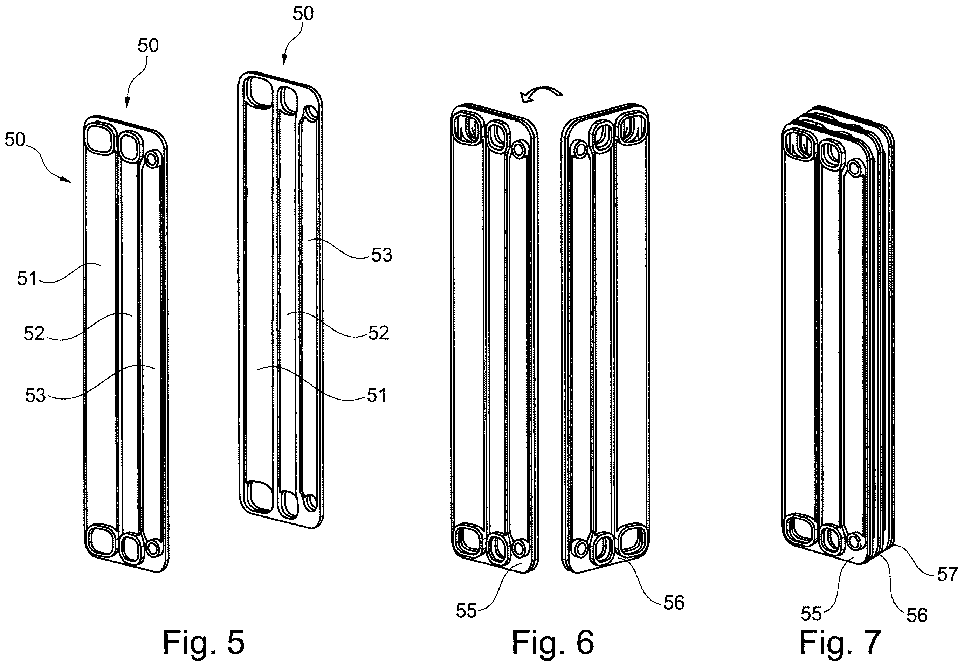

Die Figur 5 zeigt eine Anordnung zweier Scheiben 50, die gemäß der nicht erfindungsgemäßen Scheibe der Figur 3 ausgebildet sind und durch jeweils drei oben und unten an den Endbereichen der Scheiben angeordnete Anschlussbereiche, wie vorzugsweise Näpfe versehen sind, wobei zwischen diesen Näpfen jeweils ein Strömungskanal 51, 52, 53 vorgesehen ist, so dass bei einer Verbindung und Verlötung zweier identischer Scheiben ein Scheibenpaar mit drei Strömungskanälen vorgesehen sind, die an den beiden Endbereichen jeweils mit drei Näpfen versehen sind, die zur Ein- bzw. Ausleitung des Kältemittels dienen und die weiterhin zur Verbindung von benachbarten Scheiben mit diesen in Berührung treten, um dort miteinander fluiddicht verbunden zu werden.

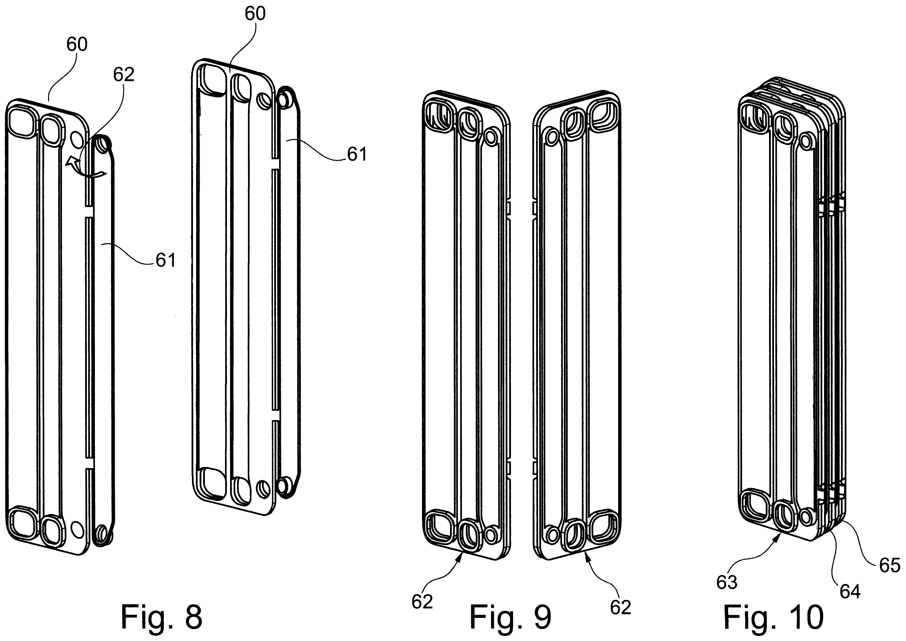

Die Figur 6 zeigt zwei solche Scheibenpaare gemäß Figur 5, die wiederum miteinander gestapelt und verbunden werden, so dass das Scheibenpaar 55 mit dem Scheibenpaar 56 wiederum miteinander verbunden wird. Und die Figur 7 zeigt eine Anordnung dreier Scheibenpaare 55, 56, 57, die als Ausschnitt eines Wärmeübertragers gemäß der Figur 1 bei der Montage verwendet werden können. Die Figuren 8 bis 10 zeigen im Wesentlichen das gleiche Aufbauschema gemäß der Figuren 5 bis 7, wobei bei den Figuren 8 bis 10 ein Scheibenpaar verwendet wird gemäß der Figur 4.

Dies bedeutet, dass eine Scheibe 60 mit der Aufsatzscheibe 61 zuerst zu einer Scheibe mit drei Fluidkanälen verarbeitet wird, indem die Aufsatzscheibe 61 gemäß dem Pfeil 62 auf die Scheibe 60 geklappt wird, wobei dies bei zwei Scheibenpaaren erfolgt, so dass die daraus entstehenden Scheiben miteinander verbunden werden können, indem die planen Oberflächen aufeinander gelegt werden, um später miteinander verlötet zu werden.

Die Figur 9 zeigt die Anordnung solcher Scheibenpaare 62, wobei die Figur 10 die Stapelung dreier solcher Scheibenpaare 63, 64, 65 zeigt, wobei diese Stapelung wiederum als Basis für einen Wärmetauscher gemäß der Figur 1 verwendbar ist.

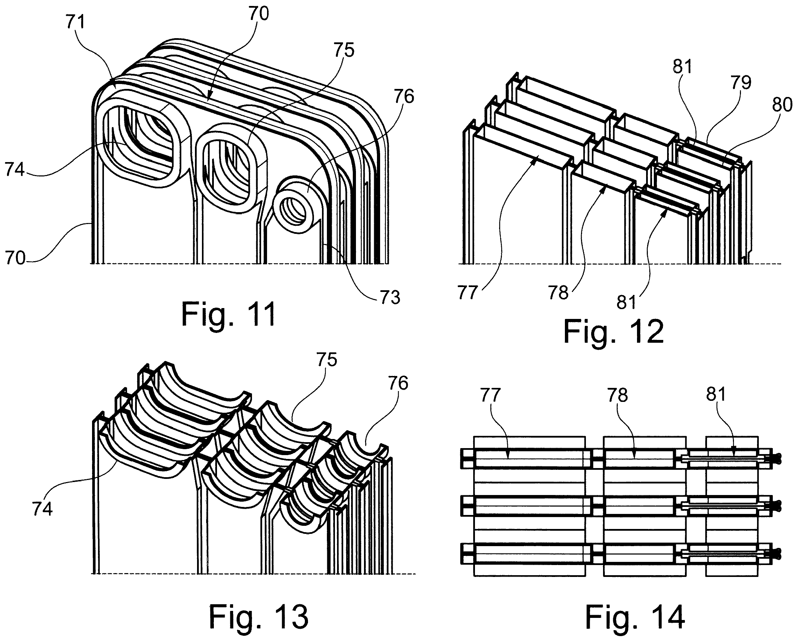

Die Figuren 11 bis 14 zeigen die Ansicht eines Wärmeübertragers gemäß den Beispielen der Figuren 5 bis 7 bzw. 8 bis 10, wobei in der Figur 11 zu erkennen ist, dass die Scheibe 70 des Scheibenpaares 71 mit einer zweiten Scheibe 70 zu einem Scheibenpaar gestapelt wird, wobei die Aufsatzscheibe 73 auf der Vorderseite der Scheibe 70 zu erkennen ist. Diese weist einen umlaufenden Rand auf zur Verlötung mit der Scheibe 70, so dass die Figur 11 einem erfindungsgemäßen Ausführungsbeispiel der Figuren 8 bis 10 entspricht. Es ist zu erkennen, dass die Näpfe 74, 75, 76 jeweils eine unterschiedliche Gestalt und jeweils einen unterschiedlichen Durchmesser aufweisen, wobei die Näpfe 74 und 75 etwa rechteckig bzw. oval ausgebildet sind und der Napf 76 rund ausgebildet ist und deutlich kleiner als die Näpfe 74 und 75.

Die Figur 12 zeigt einen Schnitt durch ein solches Scheibenpaar gemäß der Figur 11, wobei die Fluidkanäle, welche zu den Näpfen 74 und 75 gehören, in der Figur mit 77 und 78 bezeichnet sind, wobei die Fluidkanäle, welche durch den Anschluss 76 einströmbar sind, zweigeteilt sind und mit den Bezugszeichen 79, 80 versehen sind. Es ist zu erkennen, dass diese Fluidkanäle eine mittlere Wandung 81 aufweisen, welche die Wandung ist, die dem ebenen Bereich 42 in der Figur 4 entspricht. Da diese Wandung 42 zusätzlich auch doppelseitig bei einem Scheibenpaar auftritt, ist die Wandung 81 in der Figur 12 ebenso doppelwandig ausgebildet. Dies ist auch in der Figur 14 zu erkennen. Die Strömungskanäle 77 und 78 weisen eine solche zentrale Wandung nicht auf, weil in Bezug auf diese Strömungskanäle lediglich eine Prägung in der Scheibe 30 vorgenommen ist, so dass dort keine zentrale Wand, sondern nur eine Seitenwand des Strömungskanals vorliegt.

Die Figur 13 zeigt einen Schnitt durch das Scheibenpaket gemäß der Figur 11, wobei der Schnitt auf Höhe der Näpfe 74, 75, 76 ausgeführt ist, so dass zu erkennen ist, dass die Breite der Näpfe im Bereich der Anschlüsse in Querrichtung des Wärmeübertragers für jeden Napf gleich ist und zwischen den Näpfen ein Steg vorhanden ist, der eine Trennung der Fluidkanäle zwischen den Näpfen bewirkt.

Die Ausführungsbeispiele gemäß den Figuren 1 bis 14 zeigen also einen Wärmeübertrager in Scheibenbauweise, bei dem eine Vielzahl von Scheibenpaaren zur Bildung von ersten, zweiten und dritten Strömungspfaden vorgesehen sind. Die Scheibenpaare sind durch erste und zweite Scheiben gebildet, die zur Bildung der ersten und zweiten Strömungspfade zwischen diesen beiden Scheiben jeweils Prägungen oder Kanäle vorsehen, wobei in einem nicht erfindungsgemäßen Beispiel der Figuren 3 und 5 bis 7 auch die dritten Strömungskanäle durch Prägungen oder Kanäle in den Scheiben erzeugt werden, wobei bei dem erfindungsgemäßen Ausführungsbeispiel gemäß der Figuren 4 und 8 bis 10 die Kanäle durch Aufsatz einer Aufsatzscheibe auf die Scheibe, in welche lediglich die ersten und zweiten Strömungspfade eingebracht sind, erzeugt werden. Dabei wird die Aufsatzscheibe auf einen wesentlichen ebenen Bereich der Scheibe aufgesetzt und mit der Scheibe derart verlötet, dass ein für sich betrachtet fluiddichter Strömungskanal entsteht.

### Bezugszeichenliste

- 1: Wärmeübertrager
- 2: Sammler
- 3: Sammler
- 4: Block
- 5: Scheibenpaar
- 6: Raumbereich
- 7: Anschlussstutzen
- 8: Anschlussstutzen
- 9: Anschlussstutzen
- 10: Strömungskanal
- 11: Strömungskanal
- 12: Strömungskanal
- 20: Scheibenpaar
- 21: Anschluss
- 22: Anschluss
- 23: Anschluss
- 24: Strömungskanal
- 25: Strömungskanal
- 26: Strömungskanal
- 27: umlaufender Rand
- 28: Steg
- 30: Scheibenpaar
- 31: Anschlussbereich
- 32: Anschlussbereich
- 33: Anschlussbereich
- 34: Strömungskanal
- 35: Strömungskanal
- 36: Aufsatzscheibe
- 37: Napf
- 38: Strömungskanal
- 39: Rand
- 40: Bereich
- 41: Pfeil
- 42: Bereich
- 50: Scheibe
- 51: Strömungskanal
- 52: Strömungskanal
- 53: Strömungskanal
- 55: Scheibenpaar
- 56: Scheibenpaar
- 57: Scheibenpaar
- 60: Scheibe
- 61: Aufsatzscheibe
- 62: Pfeil
- 63: Scheibenpaar
- 64: Scheibenpaar
- 65: Scheibenpaar
- 70: Scheibe
- 71: Scheibenpaar
- 73: Aufsatzscheibe
- 74: Anschluss, Napf
- 75: Anschluss, Napf
- 76: Anschluss, Napf
- 77: Strömungskanal
- 78: Strömungskanal
- 79: Strömungskanal
- 80: Strömungskanal
- 81: Wandung
- 100: Luftrichtung

## Patentansprüche

1. Wärmeübertrager (1) in Scheibenbauweise, insbesondere für Kraftfahrzeuge, mit einer Vielzahl von Scheibenpaaren (5, 30, 62, 63, 64, 71) zur Bildung von ersten, zweiten und dritten Strömungspfaden, wobei zwischen benachbarten Scheibenpaaren (5, 30, 62, 63, 64, 71) ein Raumbereich für vierte Strömungspfade gebildet ist, die Scheibenpaare (5, 30, 62, 63, 64, 71) aus zumindest einer ersten Scheibe (60, 70) und einer zweiten Scheibe (60, 70) gebildet sind zur Bildung der ersten Strömungspfade und der zweiten Strömungspfade zwischen der ersten und der zweiten Scheibe (60, 70), **dadurch gekennzeichnet, dass** jeweils eine Aufsatzscheibe (36, 61, 73) auf die erste und auf die zweite Scheibe (60, 70) aufgelegt ist zur Bildung des dritten Strömungspfads zwischen der ersten Scheibe (60, 70) und der Aufsatzscheibe (36, 61, 73) und zwischen der zweiten Scheibe (60, 70) und der Aufsatzscheibe (36, 61, 73).

2. Wärmeübertrager nach Anspruch 1, **dadurch gekennzeichnet, dass** die Scheibe (60, 70) und/oder die Aufsatzscheibe (36, 61, 73) als Anschluss- und Verbindungsbereiche (31, 32, 33) Öffnungen und/oder Näpfe (37, 74, 75, 76) aufweist und zur Ausbildung von Strömungspfaden zwischen Anschlussbereichen (31, 32, 33) kanalbildende Strukturen, wie Prägungen, aufweist.

3. Wärmeübertrager nach Anspruch 1 oder 2, **dadurch gekennzeichnet, dass** die erste Scheibe (60, 70) und die zweite Scheibe (60, 70) der Scheibengruppe an zwei gegenüberliegenden Endbereichen jeweils drei Anschlussbereiche (31, 32, 33) aufweist als Einlass und/oder Auslass des ersten, des zweiten und des dritten Strömungspfads und jeweils eine kanalbildende Struktur zwischen jeweils zwei Anschlussbereichen (31, 32, 33) zur Ausbildung des ersten und des zweiten Strömungspfads vorgesehen sind.

4. Wärmeübertrager nach Anspruch 3, **dadurch gekennzeichnet, dass** die erste Scheibe (60, 70) und die zweite Scheibe (60, 70) einen Bereich (42) aufweisen, welcher mit einer Aufsatzscheibe (36, 61, 73) versehbar ist zur Bildung einer kanalbildenden Struktur zwischen jeweils zwei Anschlussbereichen (33) zur Ausbildung des dritten Strömungspfads.

5. Wärmeübertrager nach einem der vorhergehenden Ansprüche, **dadurch gekennzeichnet, dass** die kanalbildenden Strukturen in die erste Scheibe (60, 70) und/oder in die zweite Scheibe (60, 70) und/oder in die Aufsatzscheibe (36, 61, 73) als vorspringender Kanal geprägt sind.

6. Wärmeübertrager nach einem der vorhergehenden Ansprüche, **dadurch gekennzeichnet, dass** die Aufsatzscheibe (36, 61, 73) einteilig mit der ersten Scheibe (60, 70) und/oder mit der zweiten Scheibe (60, 70) gebildet ist.

7. Wärmeübertrager nach Anspruch 6, **dadurch gekennzeichnet, dass** die Aufsatzscheibe (36, 61, 73) zusammen mit der ersten oder der zweiten Scheibe (60, 70) erzeugt wird und dann durch Umbiegen auf einen ebenen Bereich (42) der ersten oder zweiten Scheibe (60, 70) platzierbar ist.

8. Wärmeübertrager nach einem der vorhergehenden Ansprüche, **dadurch gekennzeichnet, dass** die Aufsatzscheibe (36, 61, 73) getrennt von der ersten Scheibe (60, 70) oder von der zweiten Scheibe (60, 70) gebildet ist und auf einen ebenen Bereich (42) der ersten oder zweiten Scheibe (60, 70) platzierbar ist.

## Claims

1. A plate-type heat exchanger (1), in particular for motor vehicles, having a multiplicity of plate pairs (5, 30, 62, 63, 64, 71) in order to form first, second and third flow paths, wherein a space region for fourth flow paths is formed between adjacent plate pairs (5, 30, 62, 63, 64, 71), the plate pairs (5, 30, 62, 63, 64, 71) are formed from at least a first plate (60, 70) and a second plate (60, 70) in order to form the first flow paths and the second flow paths between the first and the second plate (60, 70), **characterised in that** an attachment plate (36, 61, 73) is in each case placed onto the first and onto the second plate (60, 70) in order to form the third flow path between the first plate (60, 70) and the attachment plate (36, 61, 73) and between the second plate (60, 70) and the attachment plate (36, 61, 73).

2. The heat exchanger as claimed in claim 1, **characterised in that** the plate (60, 70) and/or the attachment plate (36, 61, 73) have/has openings and/or cups (37, 74, 75, 76) as port and connecting regions (31, 32, 33) and have/has duct-forming structures, such as embossments, in order to form flow paths between port regions (31, 32, 33).

3. The heat exchanger as claimed in claim 1 or 2, **characterised in that** the first plate (60, 70) and the second plate (60, 70) of the plate group have in each case three port regions (31, 32, 33) on two opposite end regions as inlet and/or outlet of the first, the second and the third flow path, and in each case one duct-forming structure is provided between in each case two port regions (31, 32, 33) in order to form the first and the second flow path.

4. The heat exchanger as claimed in claim 3, **characterised in that** the first plate (60, 70) and the second plate (60, 70) have a region (42) which can be provided with an attachment plate (36, 61, 73) in order to form a duct-forming structure between in each case two port regions (33) in order to form the third flow path.

5. The heat exchanger as claimed in one of the preceding claims, **characterised in that** the duct-forming structures are embossed into the first plate (60, 70) and/or into the second plate (60, 70) and/or into the attachment plate (36, 61, 73) as a projecting duct.

6. The heat exchanger as claimed in one of the preceding claims, **characterised in that** the attachment plate (36, 61, 73) is formed in one piece with the first plate (60, 70) and/or with the second plate (60, 70).

7. The heat exchanger as claimed in claim 6, **characterised in that** the attachment plate (36, 61, 73) is produced together with the first or the second plate (60, 70) and can then be placed by being bent over onto a planar region (42) of the first or second plate (60, 70).

8. The heat exchanger as claimed in one of the preceding claims, **characterised in that** the attachment plate (36, 61, 73) is formed separately from the first plate (60, 70) or from the second plate (60, 70) and can be placed onto a planar region (42) of the first or second plate (60, 70).

## Revendications

1. Echangeur de chaleur (1) du type à plaques, en particulier pour des véhicules automobiles, ledit échangeur de chaleur comprenant une multiplicité de paires de plaques (5, 30, 62, 63, 64, 71) servant à la formation de premiers, de deuxièmes et de troisièmes chemins d'écoulement, où une zone d'espace pour des quatrièmes chemins d'écoulement est formée entre des paires de plaques contiguës (5, 30, 62, 63, 64, 71), les paires de plaques (5, 30, 62, 63, 64, 71) sont formées en se composant au moins d'une première plaque (60, 70) et d'une deuxième plaque (60, 70) servant à la formation des premiers chemins d'écoulement et des deuxièmes chemins d'écoulement entre la première et la deuxième plaque (60, 70), **caractérisé en ce qu'**une plaque rapportée (36, 61, 73) est placée à chaque fois sur la première et sur la deuxième plaque (60, 70), pour servir à la formation du troisième chemin d'écoulement entre la première plaque (60, 70) et la plaque rapportée (36, 61, 73), et entre la deuxième plaque (60, 70) et la plaque rapportée (36, 61, 73).

2. Echangeur de chaleur selon la revendication 1, **caractérisé en ce que** la plaque (60, 70) et / ou la plaque rapportée (36, 61, 73) présente des ouvertures et / ou des godets (37, 74, 75, 76) servant de zones de raccordement et de communication (31, 32, 33), et présente des structures formant des canaux, telles que des parties estampées, servant à la configuration de chemins d'écoulement entre des zones de raccordement (31, 32, 33).

3. Echangeur de chaleur selon la revendication 1 ou 2, **caractérisé en ce que** la première plaque (60, 70) et la deuxième plaque (60, 70) du groupe de plaques présentent à chaque fois, au niveau de deux zones d'extrémités opposées, trois zones de raccordement (31, 32, 33) servant d'entrée et / ou de sortie du premier, du deuxième et du troisième chemin d'écoulement, et il est prévu à chaque fois une structure formant à chaque fois un canal entre deux zones de raccordement (31, 32, 33), ladite structure servant à la configuration du premier et du deuxième chemin d'écoulement.

4. Echangeur de chaleur selon la revendication 3, **caractérisé en ce que** la première plaque (60, 70) et la deuxième plaque (60, 70) présentent une zone (42) qui peut être dotée d'une plaque rapportée (36, 61, 73) servant à la formation d'une structure formant à chaque fois un canal entre deux zones de raccordement (33), ladite structure servant à la configuration du troisième chemin d'écoulement.

5. Echangeur de chaleur selon l'une quelconque des revendications précédentes, **caractérisé en ce que** les structures formant des canaux dans la première plaque (60, 70) et / ou dans la deuxième plaque (60, 70) et / ou dans la plaque rapportée (36, 61, 73) sont estampées comme un canal faisant saillie.

6. Echangeur de chaleur selon l'une quelconque des revendications précédentes, **caractérisé en ce que** la plaque rapportée (36, 61, 73) est configurée en formant une seule et même pièce avec la première plaque (60, 70) et / ou avec la deuxième plaque (60, 70).

7. Echangeur de chaleur selon la revendication 6, **caractérisé en ce que** la plaque rapportée (36, 61, 73) est produite en même temps que la première ou la deuxième plaque (60, 70), et ensuite, par cintrage, ladite plaque rapportée peut être placée sur une zone plane (42) de la première ou de la deuxième plaque (60, 70).

8. Echangeur de chaleur selon l'une quelconque des revendications précédentes, **caractérisé en ce que** la plaque rapportée (36, 61, 73) est formée en étant séparée de la première plaque (60, 70) ou de la deuxième plaque (60, 70) et peut être placée sur une zone plane (42) de la première ou de la deuxième plaque (60, 70).
